(19) Europäisches Patentamt
European Patent Office
Office européen des brevets

(11) **EP 2 415 730 A1**

(12) **EUROPEAN PATENT APPLICATION**
published in accordance with Art. 153(4) EPC

(43) Date of publication:
08.02.2012 Bulletin 2012/06

(51) Int Cl.:
*C04B 35/46* (2006.01)   *B01D 39/20* (2006.01)
*B09B 3/00* (2006.01)   *C04B 35/00* (2006.01)

(21) Application number: 10758666.1

(22) Date of filing: 29.03.2010

(86) International application number:
PCT/JP2010/055606

(87) International publication number:
WO 2010/113895 (07.10.2010 Gazette 2010/40)

(84) Designated Contracting States:
AT BE BG CH CY CZ DE DK EE ES FI FR GB GR HR HU IE IS IT LI LT LU LV MC MK MT NL NO PL PT RO SE SI SK SM TR

(30) Priority: 30.03.2009 JP 2009082821

(71) Applicant: Sumitomo Chemical Company, Limited Tokyo 104-8260 (JP)

(72) Inventors:
• NEMOTO, Akiyoshi
Tsukuba-shi
Ibaraki 305-0046 (JP)
• YOSHINO, Hajime
Niihama-shi
Ehime 792-0009 (JP)
• NARUMI, Masayuki
Niihama-shi
Ehime 792-0811 (JP)

(74) Representative: Harmsen, Dirk
Vossius & Partner
Siebertstrasse 4
81675 München (DE)

(54) **METHOD FOR PRODUCING ALUMINUM TITANATE CERAMIC BODY**

(57) The invention is to provide a process for producing an aluminum titanate-based ceramics body, wherein a regenerated unfired starting material recovered in a production process for an aluminum titanate-based ceramics body is used and a regenerated clay is easy to prepare and an aluminum titanate-based ceramics body excellent in a mechanical strength and in a thermal characteristics such as low thermal expansion and heat resistance can be obtained. The invention is a process for producing an aluminum titanate-based ceramics body using an unfired regenerated starting material recovered in a production process for an aluminum titanate-based ceramics body, comprising the following steps : a step of preparing a pulverized material having a diameter of 1 mm or less from the unfired regenerated starting material; a step of preparing a regenerated clay containing the pulverized material and water; a step of shaping the regenerated clay to form a shaped body; and a step of firing the shaped body.

EP 2 415 730 A1

**Description**

TECHNICAL FIELD

The present invention relates to a process for producing an aluminum titanate-based ceramics body, and more precisely to a process for producing an aluminum titanate-based ceramics body which uses, as a regenerated starting material, the unfired material recovered in a production process for an aluminum titanate-based ceramics body.

BACKGROUND ART

Aluminum titanate-based ceramics are ceramics containing titanium and aluminum as the constitutive elements and showing a crystal pattern of aluminum titanium in X-ray diffractometry, and are known as ceramics excellent in heat resistance. Aluminum titanate-based ceramics have heretofore been used for firing tools such as crucibles. Recently, the industrial applicability of the ceramics is increasing as a material of constituting a ceramics filter (diesel particulate filter, hereinafter referred to as DPF) for collecting fine carbon particles (diesel particulates) contained in exhaust gas discharged from internal combustion engines such as diesel engines.
As a process for producing aluminum titanate-based ceramics, known is a process of firing a starting material mixture containing a powder of a titanium source compound such as titania and a powder of an aluminum source compound such as alumina, or a shaped body thereof (Patent Reference 1).

CITATION LIST

PATENT REFERENCE

   Patent Reference 1: WO05/105704

SUMMARY OF THE INVENTION

PROBLEMS THAT THE INVENTION IS TO SOLVE

As a process for producing an aluminum titanate-based ceramics body having a desired shape by a process of firing a shaped body of a starting material mixture, particularly, there can be mentioned a process that comprises kneading a starting material powder containing an aluminum source powder and a titanium source powder (or the starting material powder may be an aluminum titanate-based ceramics powder itself) with water and additives such as binder and pore-forming material added thereto to prepare a clay (unfired clay mixture) and shape the clay in the desired form, followed by drying, degreasing and firing the obtained shaped body. In the process, there may occur some failures such as chipping or cracking of the shaped body, for example, in shaping the clay or in firing or degreasing the shaped body. Specifically, the starting material (aluminum titanate-based ceramics powder itself and/or mixture to be led to aluminum titanate-based ceramics by firing) containing water and/or additives (at least one kind of binder, lubricant and pore-forming agent) may remain as an unfired material with some troubles (chipping or cracking and the like of a shaped body), owing to the reason of chipping or cracking and the like of a shaped body in a state thereof without heat treatment at all or in a state thereof with some heat treatment (generally at lower than 1300°C) such as drying or degreasing before the firing step in the process of producing the aluminum titanate-based ceramics.
Recycling the unfired starting material with such failures is favorable from the viewpoint of increase for yield ratio and cost reduction. However, the regenerated starting material has some problems in that it is hardly reused as the clay (regenerated clay) for forming a shaped body, or that is, it is difficult to prepare a uniform clay owing to the reasons that the particle diameter of the regenerated starting material is not constant and the composition thereof is not uniform. In addition, the aluminum titanate-based ceramics body obtained by the use of such a regenerated starting material is not satisfactory in point of the mechanical strength and of the thermal characteristics such as low thermal expansion and heat resistance thereof.
Accordingly, an object of the invention is to provide a process for producing an aluminum titanate-based ceramics body, wherein a regenerated unfired starting material recovered in a production process for an aluminum titanate-based ceramics body is used and a regenerated clay is easy to prepare and an aluminum titanate-based ceramics body excellent in a mechanical strength and in a thermal characteristics such as low thermal expansion and heat resistance can be obtained.

MEANS FOR SOLVING THE PROBLEMS

The invention is a process for producing an aluminum titanate-based ceramics body using an unfired regenerated starting material recovered in a production process for an aluminum titanate-based ceramics body, comprising the following steps:

(i) a step of preparing a pulverized material having a diameter of 1 mm or less from the unfired regenerated starting material;
(ii) a step of preparing a regenerated clay containing the pulverized material and water;
(iii) a step of shaping the regenerated clay to form a shaped body; and
(iv) a step of firing the shaped body.

The unfired regenerated starting material is preferably an unfired shaped body or broken pieces thereof, or an intermediate for which a heating up to a firing temperature has been stopped along the way.

The step (i) of preparing the pulverized material having a diameter of 1 mm or less preferably includes a step of pulverizing and/or classifying the unfired regenerated starting material. The classification can be carried out, for example, by sieving. The diameter of the pulverized material is preferably 200 $\mu$m or less.

The unfired regenerated starting material or the pulverized material may have been heat-treated at a temperature lower than a firing temperature, particularly lower than 1300°C. The heat-treatment of unfired regenerated starting material or the pulverized material can be carried out in an atmosphere containing oxygen in an amount of 1% by volume or more, or in an oxygen-containing gas current that contains oxygen in an amount of 1% by volume or more.

The unfired regenerated starting material or the pulverized material may have been so heat-treated that the water content thereof could be 5% by mass or less. The heat treatment temperature of this case is preferably lower than 150°C. When the unfired regenerated starting material or the pulverized material has been so heat-treated that the water content thereof could be 5% by mass or less and preferably has been heat-treated at the temperature lower than 150°C, the step (ii) of preparing the regenerated clay includes a step of kneading the pulverized material at least with water added thereto.

The unfired regenerated starting material or the pulverized material may have been so heat-treated that the ignition loss thereof could be 5% by mass or less. The heat treatment temperature of this case is preferably 300°C or higher and lower than 1000°C. When the unfired regenerated starting material or the pulverized material has been so heat-treated that the ignition loss thereof could be 5% by mass or less and preferably has been heat-treated at the temperature of 300°C or higher and lower than 1000°C, the step (ii) of preparing the regenerated clay includes a step of kneading the pulverized material at least with water and with one or more kinds of ingredient selected from a group of a binder, a lubricant and a pore-forming agent added thereto.

The unfired regenerated starting material preferably comprises an aluminum titanate-based ceramics and/or a mixture to be led to an aluminum titanate-based ceramics by firing.

The aluminum titanate-based ceramics may contain an aluminum element and a titanium element, and may further contain a magnesium element and/or a silicon element.

The mixture may contain an aluminum source powder and a titanium source powder, and may further contain a magnesium element and/or a silicon element. As the silicon source powder, a powder comprising feldspar or glass frit, or a mixture thereof can be favorably used.

The regenerated clay may further contain one or more kinds of ingredients selected from a group of a binder, a lubricant and a pore-forming agent.

The regenerated clay may further contain a new starting material comprising an aluminum titanate-based ceramics powder and/or a powder mixture to be led to an aluminum titanate-based ceramics by firing.

The aluminum titanate-based ceramics powder to constitute the new starting material may contain an aluminum element and a titanium element, and may further contain a magnesium element and/or a silicon element.

The powder mixture to constitute the new starting material may contain an aluminum source powder and a titanium source powder, and may further contain a magnesium source powder and/or a silicon source powder. As the silicon source powder, a powder comprising feldspar or glass frit, or a mixture thereof can be favorably used.

The median particle diameter of the aluminum titanate-based ceramics powder and/or the powders contained in the powder mixture, which constitute the new starting material, is preferably 100 $\mu$m or less.

The firing temperature in the step (iv) of firing the shaped body is preferably 1300°C or higher and lower than 1650°C.

The invention include an aluminum titanate-based ceramics honeycomb shaped body for ceramics filters, produced in the process according to any of the above-mentioned processes, and also include a diesel particulate filter comprising the honeycomb shaped body.

ADVANTAGE OF THE INVENTION

By the production process of the invention, an aluminum titanate-based ceramics body can be produced efficiently since regenerated clay can be prepared easily by the use of an unfired regenerated starting material, and an aluminum titanate-based ceramics body excellent in the mechanical strength and in the thermal characteristics such as low thermal expansion and heat resistance can be provided, and the production yield of the aluminum titanate-based ceramics body can thereby greatly increase. The aluminum titanate-based ceramics body obtained by the invention is favorably applicable to ceramics filters such as DPF.

MODE FOR CARRYING OUT THE INVENTION

In the production process for an aluminum titanate-based ceramics body of the invention, an unfired body (unfired regenerated starting material) generated and recovered in a production process for an aluminum titanate-based ceramics body is used as at least a part of the starting material, and the process comprises the following steps:

   (i) A step of preparing a pulverized material having a diameter of 1 mm or less from the unfired regenerated starting material;
   (ii) A step of preparing a regenerated clay containing the pulverized material and water;
   (iii) A step of shaping the regenerated clay to form a shaped body; and
   (iv) A step of firing the shaped body.

The steps are described in detail hereinunder.

(i) Grinding Step:

In this step, a pulverized material having a diameter of 1 mm or less is obtained from an unfired regenerated starting material. The unfired regenerated starting material to be used, of which the particle diameter is suitably controlled, can be readily recycled to clay and a uniform regenerated clay is easy to prepare; and therefore, an aluminum titanate-based ceramics body can be produced efficiently and an aluminum titanate-based ceramics body excellent in the mechanical strength and in the thermal characteristics such as low thermal expansion and heat resistance can be obtained. In the invention, the diameter means the minor axis of the pulverized material, and for example, when the pulverized material is sieved as described below, the particles passing through a sieve with a mesh size of 1 mm are meant.

The above-mentioned, unfired regenerated starting material is the unfired material generated and recovered in a production process of producing an aluminum titanate-based ceramics body, or that is, the material is a stating material or an intermediate which does not go through the firing step, and its form may be any of a powdery form, a massive form or a shaped body. The production process for an aluminum titanate-based ceramics where the unfired regenerated starting material is recovered (hereinafter the production process for recovering the unfired regenerated starting material is referred to as "production process for recovery" for the purpose of differentiating it from the production process of the invention) is not specifically limited so far as the process includes a firing step for producing an aluminum titanate-based ceramics body. As the "production process for recovery", for example, there can be mentioned a production process that includes a firing step in which (a) a powder mixture to be led to an aluminum titanate-based ceramics by firing (for example, a mixture containing an aluminum source powder and a titanium source powder and optionally added magnesium source powder and silicon source powder), or (b) an aluminum titanate-based ceramics powder, or (c) both of these is/are used as the starting material, and the starting material or the shaped body thereof is fired. The production process may further include, after formation of the shaped body, a step of adjusting the shaped body to make it have a desired shape, a drying step of removing water and the like from the shaped body after its formation, and a degreasing step of removing the organic materials such as the binder, the pore-forming agent and the like contained in the shaped body, by firing.

As the aluminum source powder, the titanium source powder, the magnesium source powder and the silicon source powder to be used as the starting material in the "production process for recovery", usable are the same materials as the aluminum source powder, the titanium source powder, the magnesium source powder and the silicon source powder to be contained in the "mixture to be led to an aluminum titanate-based ceramics by firing" as the regenerated starting material and the like to be mentioned below. As the aluminum titanate-based ceramics powder to be used as the starting material in the "production process for recovery", usable is the same one as the aluminum titanate-based ceramics as the regenerated starting material and the like mentioned below.

The unfired regenerated starting material that is generated and recovered in the above-mentioned "production process for recovery" is not specifically limited so far as the material is any unfired one, for example, including an unfired shaped body or broken pieces thereof, or an intermediate for which the heating up to the firing temperature has been stopped along the way. More particularly, there can be mentioned a failed shaped body or broken pieces thereof (for example, cracked or chipped shaped body or broken piece thereof) that is generated (a) during shaping the above-mentioned starting material, (b) during adjusting the shape of the starting material shaped body, or (c) during drying, degreasing or heating up to the firing temperature of the starting material or the shaped body thereof; broken pieces or a ceramics powder that is generated during adjusting the above-mentioned starting material shaped body to make it have a desired shape (for example, cutting powder and the like that is generated during cutting a fired shaped body); an intermediate shaped body for which the processing step has been stopped because of some reason of production equipment trouble and the like along the way during drying the starting material shaped body or during degreasing or heating it up to the firing temperature.

Here, the unfired regenerated starting material may have been heat-treated in the production process "for recovery", or after recovered (before pulverized or after pulverized), or may not have been heat-treated. As the unfired regenerated starting material which has not been heat-treated, for example, there may be mentioned a failed shaped body and broken pieces thereof that are generated during shaping the starting material or during adjusting the shape of the shaped body in the "production process for recovery".

As the unfired regenerated starting material which has been heat-treated, for example, there may be mentioned a failed shaped body and broken pieces thereof that are generated during drying, degreasing or heating up to the firing temperature of the starting material shaped body in the "production process for recovery"; a intermediate shaped body for which the processing step has been stopped because of some reason of production equipment trouble and the like along the way during drying, degreasing or heating up to the firing temperature of the starting material shaped body in the "production process for recovery". Those that are prepared by additionally, outside the "production process for recovery", heat-treating the unfired regenerated starting material that is recovered with no heat treatment or the unfired regenerated starting material which has been heat-treated and recovered in the "production process for recovery" are also within the scope of the unfired regenerated starting material which has been heat-treated.

The case to be given additional heat treatment is not specifically limited, and includes, for example, a case where the drying degree or the degreasing degree of the shaped body are unclear such as a case where the processing step is stopped along the way during drying or degreasing or heating up to the firing temperature of the starting material shaped body in the "production process for recovery".

Regarding the temperature for the heat treatment in the "production process for recovery" and for the additional heat treatment not in the "production process for recovery", the regenerated starting material must be in an unfired state during the heat treatment, and therefore the heat treatment temperature is lower than the lower limit of ordinary temperature for firing, or that is, lower than 1300°C, and is preferably lower than 1000°C at which aluminum titanate formation reaction does not go on and no particle growth occurs.

In one preferred embodiment of the invention, the unfired regenerated starting material which has been heat-treated has been so processed as to have a water content of 5% by mass or less. One example of the regenerated starting material of the type can include a regenerated starting material that has been heat-treated in a temperature range of lower than 150°C for a heat treatment time of from 10 minutes to 300 hours or so in the "production process for recovery" and/or outside the production process. The regenerated starting material that has been heat-treated in a temperature range of lower than 150°C in and/or outside the "production process for recovery" includes a shaped body recovered after the drying step of starting material shaped body in the production process; the shaped body recovered during the drying step; and those prepared by additionally heat-treating these shaped bodies in a temperature range of lower than 150°C.

The regenerated starting material that has been heat-treated in a temperature range of lower than 150°C so as to have a water content of 5% by mass or less does not substantially contain water, and therefore, in the step (ii) of preparing a regenerated clay, an operation of determining the amount of water to be separately added to the regenerated clay based on the amount of water contained in the pulverized material may be omitted, and accordingly, the operation of preparing the regenerated clay can be simplified. In addition, the regenerated starting material keeps the additives such as binder, lubricant, pore-forming agent and the like added during the production process for the aluminum titanate-based ceramics body, almost or just as they are therein, and therefore, in the step (ii) of preparing a regenerated clay, basically only water may be added to prepare the regenerated clay. Accordingly, any complicated operation of determining the amount of the additives to be added to the regenerated clay can be omitted. From these viewpoints, when a regenerated starting material not clear as to whether or not it has been heat-treated in a temperature range lower than 150°C to have a water content of 5% by mass or less, such as a shaped body recovered during the drying step thereof for some reason, is used and when its water content is measured but its water content is not 5% by mass or less, preferably, the regenerated starting material or the pulverized material obtained from it is additionally heat-treated so as to have a water content of 5% by mass or less. When the unfired regenerated starting material is heat-treated in a temperature range of lower than 150°C for a predetermined period of time in the "production process for recovery" and/or outside the production process and when it could be fully proved that the heat treatment has made the unfired regenerated starting material have a water content of 5% by mass or less, then the analysis to check the water content of 5% by mass or less is not always necessary.

In another preferred embodiment of the invention, the unfired regenerated starting material which has been heat-treated has been so heat-treated that the ignition loss thereof could be 5% by mass or less (in this case, the water content thereof is also 5% by mass or less). As one example of the regenerated starting material of the type, there may be mentioned a regenerated starting material that has been heat-treated in a temperature range of 300°C or higher and lower than 1300°C, preferably lower than 1000°C, for from 10 minutes to 300 hours or so, in the "production process for recovery" and/or outside the production process. The regenerated starting material that has been heat-treated in a temperature range of 300°C or higher and lower than 1300°C in and/or outside the "production process for recovery" includes the shaped body recovered during heating before the degreasing step of the starting material shaped body in the production process; the shaped body recovered after the degreasing step, or the shaped body recovered during the degreasing step; the shaped body recovered during heating up to the firing temperature; and those prepared by additionally heat-treating the shaped bodies in a temperature range of 300°C or higher and lower than 1300°C.

The regenerated starting material that has been heat-treated in a temperature range of 300°C or higher and lower than 1300°C (preferably lower than 1000°C) so that the ignition loss thereof could be 5% by mass or less does not substantially contain additives such as binder, lubricant, pore-forming agent, and water, and therefore, in the step (ii) of preparing a regenerated clay, the amount of the additives and water to be added to the regenerated clay may be determined not analyzing the content of the additives and the water in the pulverized material, and accordingly, the operation of preparing the regenerated clay can be simplified. Specifically, the additives and water may be added to the regenerated clay on the same level as that to a new starting material. From these viewpoints, when a regenerated starting material not clear as to whether or not it has been heat-treated in a temperature range of 300°C or higher and lower than 1300°C so that the ignition loss thereof could be 5% by mass or less, such as a shaped body recovered during the degreasing step thereof for some reason, is used and when its ignition loss is measured but its ignition loss is not 5% by mass or less, preferably, the regenerated starting material or the pulverized material obtained from it is additionally heat-treated so that the ignition loss thereof could be 5% by mass or less. When the unfired regenerated starting material has been heat-treated in a temperature range of 300°C or higher and lower than 1300°C for a predetermined period of time in the production process for the aluminum titanate-based ceramics body and/or outside the production process, and when it could be fully proved that the heat treatment has made the unfired regenerated starting material have an ignition loss of 5% by mass or less, then the analysis to check the ignition loss of 5% by mass or less is not always necessary.

The heat treatment atmosphere for the heat treatment in the "production process for recovery" and for the additional heat treatment outside the production process is not specifically limited, and for efficiently burning and removing the organic ingredients, the heat treatment is preferably carried out in an atmosphere containing oxygen in an amount of 1% by volume or more, or in an oxygen-containing gas current that contains oxygen in an amount of 1% by volume or more. The oxygen concentration in this case is preferably 5% by volume or more.

The unfired regenerated starting material may be an aluminum titanate-based ceramics, or a mixture to be led to an aluminum titanate-based ceramics by firing, or may comprise both of these. The aluminum titanate-based ceramics is a ceramics mainly comprising an aluminum titanate-based crystal, and contains at least an aluminum element and a titanium element as the constitutive elements. The aluminum titanate-based ceramics may further contain a magnesium element and/or a silicon element. When a regenerated starting material comprising an aluminum titanate-based ceramics that contains a magnesium element and/or a silicon element is used, an aluminum titanate-based ceramics body having more improved heat resistance can be obtained. Specific examples of the aluminum titanate-based ceramics to constitute the unfired regenerated starting material can be mentioned below.

The mixture to be led to an aluminum titanate-based ceramics by firing includes a mixture containing an aluminum source powder and a titanium source powder.

The mixture may further contain a magnesium source powder and/or a silicon source powder. Specific examples of the aluminum source powder, the titanium source powder, the magnesium source powder and the silicon source powder to be contained in the mixture that constitutes the regenerated starting material can be mentioned below.

The unfired regenerated starting material may contain any one or more kinds of ingredients selected from binder, lubricant, pore-forming agent, dispersant and solvent such as water. As specific examples of the binder, the lubricant, the pore-forming agent and the dispersant to be contained in the unfired regenerated starting material, there are mentioned the same ones as those to be added in preparing the regenerated clay to be mentioned below.

In this step, a pulverized material having a diameter of 1 mm or less is prepared from the above-mentioned, unfired regenerated starting material. The method for preparing the pulverized material having a diameter of 1 mm or less is not specifically limited. For example, there may be mentioned a method of pulverizing the unfired regenerated starting material with a known grinding apparatus, optionally followed by classifying the pulverized material. As the grinding apparatus, usable is a jaw crusher, a roller mill, a pin mill and the like. Pulverizing with grinding media is also favorable. The classification method is not specifically limited, for which, for example, preferred is sieving with a sieve or a mesh, dry classification based on the difference in the inertial force or the centrifugal force given to air current-entrained powder, wet classification based on the difference in the precipitation speed of powder dispersed in liquid, and combination of such multiple classification methods. When the unfired regenerated starting material is powdery, pulverizing it is not always necessary in obtaining the pulverized material having a diameter of 1 mm or less, and classification may also be unnecessary.

The grinding (optionally followed by classification) may be carried out plural times. For example, an unfired regenerated starting material is pulverized and classified to give a pulverized material having a diameter of 1 mm or less, and then the residue may be again pulverized and classified and a pulverized material having a diameter of 1 mm or less may be recovered from the resulting residue. Accordingly, the recycling rate from the unfired regenerated starting material can be thereby increased.

The diameter of the pulverized material is preferably 200 $\mu$m or less from the viewpoint of the easiness in preparing the regenerated clay, and of the mechanical strength and/or the low thermal expansion and the heat resistance of the aluminum titanate-based ceramics body to be obtained.

In the invention, the pulverized material may be heat-treated. Particularly, in place of heat-treating the unfired regenerated starting material outside the "production process for recovery" as described in the above, the pulverized material may be heat-treated in the same manner. The heat treatment temperature and the heat treatment atmosphere in this case may be the same as above; and as a particular embodiment of the heat treatment, there may be mentioned heat treatment to be carried out in a temperature range lower than 150°C so that the water content of the treated material could be 5% by mass or less, or heat treatment to be carried out in a temperature range of 300°C or higher and lower than 1300°C (preferably lower than 1000°C) so that the ignition loss of the treated material could be 5% by mass or less.

(ii) Regenerated Clay Preparation Step:

In this step, a regenerated clay that contains the pulverized material having a diameter of 1 mm or less obtained in the above step (i) and water is prepared. The regenerated clay can be obtained by kneading the pulverized material along with water optionally added thereto. For example, when the pulverized material is obtained from the regenerated starting material such as the failed shaped body and broken piece thereof that have been generated in shaping the starting material or in adjusting the shape of the shaped body in the "production process for recovery", the regenerated clay may be prepared with addition of no water or only a little water thereto. When the pulverized material is obtained from the regenerated starting material that has been heat-treated in a temperature range of lower than 150°C so as to have a water content of 5% by mass or less, the regenerated clay may be prepared basically by adding water alone to the pulverized material (but not newly adding additives such as binder, lubricant or pore-forming agent thereto). For the kneading, an ordinary kneader can be used.

The regenerated clay may further contain at least any one or more kinds of additives selected from binder, lubricant and pore-forming agent. These additives may be ones derived from the unfired regenerated starting material, or may be ones newly added in preparing the regenerated clay, or may be both of these. For example, when the pulverized material is obtained from the regenerated starting material such as the failed shaped body and the broken piece thereof that have been generated in shaping the starting material or in adjusting the shape of the shaped body in the "production process for recovery", it is not always necessary to newly add the additives in preparing the regenerated clay. When the pulverized material is obtained from the regenerated starting material that has been heat-treated in a temperature range of lower than 150°C so as to have a water content of 5% by mass or less, the regenerated clay that contains the additives may be prepared merely by adding water alone thereto but not newly adding the additive. When the pulverized material is obtained from the regenerated starting material that has been heat-treated in a temperature range of 300°C or higher and lower than 1300°C so that the ignition loss thereof could be 5% by mass or less, water and at least one or more kinds of additives selected from a group of binder, lubricant and pore-forming agent must be added to the pulverized material for obtaining the regenerated clay that contains the additives.

The binder includes celluloses such as methyl cellulose, carboxymethyl cellulose, sodium carboxymethyl cellulose; alcohols such as polyvinyl alcohol; salts such as lignin sulfonate; waxes such as paraffin wax, microcrystalline wax; and thermoplastic resins such asEVA, polyethylene, polystyrene, liquid-crystal polymer, engineering plastics. The amount of the binder to be added is generally 20 parts by mass or less, preferably 15 parts by mass or less relative to 100 parts by mass of the total of the $Al_2O_3$ (alumina)-equivalent amount of the Al ingredient, the $TiO_2$ (titania) -equivalent amount of the Ti ingredient, the MgO (magnesia)-equivalent amount of the Mg ingredient and the $SiO_2$ (silica)-equivalent amount of the Si ingredient in the regenerated clay.

The lubricant includes alcohols such as glycerin; higher fatty acids such a caprylic acid, lauric acid, palmitic acid, alginic acid, oleic acid, stearic acid; and metal salts of stearic acid such as aluminum stearate. The amount of the lubricant to be added is generally from 0 to 10 parts by mass, preferably from 0.1 to 5 parts by mass, more preferably from 1 to 5 parts by mass relative to 100 parts by mass of the total of the $Al_2O_3$ (alumina)-equivalent amount of the Al ingredient, the $TiO_2$ (titania)-equivalent amount of the Ti ingredient, the MgO (magnesia)-equivalent amount of the Mg ingredient and the $SiO_2$ (silica)-equivalent amount of the Si ingredient in the regenerated clay.

The pore-forming agent includes carbon materials such as graphite; resins such as polyethylene, polypropylene, polymethyl methacrylate; vegetable materials such as starch, nutshell, walnut-shell, corn; ice; and dry ice. The amount of the pore-forming agent to be added is generally from 0 to 40 parts by mass, preferably from 0 to 25 parts by mass relative to 100 parts by mass of the total of the $Al_2O_3$ (alumina)-equivalent amount of the Al ingredient, the $TiO_2$ (titania)-equivalent amount of the Ti ingredient, the MgO (magnesia) -equivalent amount of the Mg ingredient and the $SiO_2$ (silica)-equivalent amount of the Si ingredient in the regenerated clay.

A dispersant of, for example, inorganic acids such as nitric acid, hydrochloric acid, sulfuric acid; organic acids such as oxalic acid, citric acid, acetic acid, malic acid, lactic acid; alcohols such as methanol, ethanol, propanol; and surfactants such as ammonium polycarboxylate, polyoxyalkylene alkyl ether may be added to the regenerated clay. The amount of the dispersant to be added is generally from 0 to 20 parts by mass, preferably from 0.1 to 8 parts by mass, more preferably from 2 to 8 parts by mass relative to 100 parts by mass of the total of the $Al_2O_3$ (alumina)-equivalent amount of the Al ingredient, the $TiO_2$ (titania)-equivalent amount of the Ti ingredient, the MgO (magnesia)-equivalent amount of the Mg ingredient and the $SiO_2$ (silica)-equivalent amount of the Si ingredient in the regenerated clay.

To the regenerated clay, a new starting material may be further added as a part of the starting material of the aluminum titanate-based ceramics body, along with the pulverized material of the unfired regenerated starting material thereto, and the new starting material may be (a) an aluminum titanate-based ceramics powder, or (b) a powder mixture to be led to an aluminum titanate-based ceramics by firing, or (c) both of these. The new starting material means a newly-added starting material that is not one generated and recovered in the "production process for recovery".

The aluminum titanate-based ceramics as the unfired regenerated starting material, and the aluminum titanate-based ceramics powder as the new starting material are both ceramics each comprising an aluminum titanate-based crystal, and contain at least an aluminum element and a titanium element as the constitutive elements. The aluminum titanate-based ceramics may further contain a magnesium element and/or a silicon element. When the aluminum titanate-based ceramics containing a magnesium element and/or a silicon element is used, an aluminum titanate-based ceramics body having more improved heat resistance can be obtained. The aluminum titanate-based ceramics may contain inevitable impurities that are derived from the starting materials thereof or are mixed in the production process.

The X-ray diffraction spectrum of the aluminum titanate-based ceramics may include crystal patterns of alumina, titania, silica and the like, in addition to the crystal pattern of aluminum titanate or aluminum magnesium titanate. When the aluminum titanate-based ceramics comprises an aluminum magnesium titanate crystal, the ceramics may be represented by a compositional formula, $Al_{2(1-x)}Mg_xTi_{(i+x)}O_5$. In the compositional formula, the value x is preferably 0.01 or more, more preferably not less than 0.01 and not more than 0.7, even more preferably not less than 0.02 and not more than 0.5.

For the "mixture to be led to an aluminum titanate-based ceramics by firing" as the regenerated starting material, and for the "powder mixture to be led to an aluminum titanate-based ceramics by firing" as the new starting material, there can be mentioned a mixture containing an aluminum source powder and a titanium source powder.

The aluminum source powder is a powder of a material that will become the aluminum ingredient to constitute the aluminum titanate-based ceramics body. The aluminum source powder includes, for example, a powder of alumina (aluminum oxide). The alumina may be crystalline or amorphous. When the alumina is crystalline, the crystal form thereof includes a $\gamma$ form, a $\delta$ form, a $\theta$ form, and an $\alpha$ form. Above all, an $\alpha$-form alumina is preferably used.

The aluminum source powder may also be a powder of a material to be led to alumina by firing in air. The material includes, for example, aluminum salt, aluminum alkoxide, aluminum hydroxide, and aluminum metal.

The aluminum salt may be a salt with an inorganic acid, or a salt with an organic acid. The inorganic salt particularly includes, for example, nitrates such as aluminum nitrate, ammonium aluminum nitrate; and carbonates such as ammonium aluminum carbonate. The organic salt includes, for example, aluminum oxalate, aluminum acetate, aluminum stearate, aluminum lactate, and aluminum laurate.

Particularly, the aluminum alkoxide includes, for example, aluminum isopropoxide, aluminum ethoxide, aluminum sec-butoxide, and aluminum tert-butoxide.

The aluminum hydroxide may be crystalline or amorphous. When the aluminum hydroxide is crystalline, the crystal form thereof includes, for example, a gibbsite form, a bayerite form, a norstrandite form, a boehmite form, and a pseudo-boehmite form. Amorphous aluminum hydroxide includes, for example, an aluminum hydrolyzate to be obtained by hydrolysis of an aqueous solution of a water-soluble aluminum compound such as aluminum salt, aluminum alkoxide.

As the aluminum source powder, one type alone may be used or two or more types may be used in combination with each other. Of the above, an alumina powder is preferred as the aluminum source powder, and an $\alpha$-form alumina powder is more preferred. The aluminum source powder may contain inevitable impurities that are derived from the starting materials thereof or are mixed in the production process.

The titanium source powder is a powder of a material that will become the titanium ingredient to constitute the aluminum titanate-based ceramics body, and the material is, for example, a powder of titanium oxide. Titanium oxide includes, for example, titanium(IV) oxide, titanium(III) oxide, and titanium(II) oxide. Titanium(IV) oxide is preferred. The titanium(IV) oxide may be crystalline or amorphous. When the titanium(IV) oxide is crystalline, the crystal form thereof includes an anatase form, a rutile form, and a brookite form. An anatase-form or rutile-form titanium(IV) oxide is more preferred.

The titanium source powder may also be a powder of a material to be led to titania (titanium oxide) by firing in air. The material includes, for example, titanium salt, titanium alkoxide, titanium hydroxide, titanium nitride, titanium sulfide, and titanium metal.

The titanium salt particularly includes titanium trichloride, titanium tetrachloride, titanium(IV) sulfide, titanium (VI) sulfide, and titanium(IV) sulfate. The titanium alkoxide particularly includes titanium(IV) ethoxide, titanium(IV) methoxide, titanium(IV) t-butoxide, titanium(IV) isobutoxide, titanium(IV) n-propoxide, titanium(IV) tetraisopropoxide, and their chelate compounds.

As the titanium source powder, one type alone may be used or two or more types may be used in combination with each other. Of the above, a titanium oxide powder is preferred as the titanium source powder, and a titanium (IV) oxide powder is more preferred. The titanium source powder may contain inevitable impurities that are derived from the starting materials thereof or are mixed in the production process.

The ratio by mass of the $Al_2O_3$ (alumina) -equivalent amount of the aluminum source powder to the $TiO_2$ (titania)-equivalent amount of the titanium source powder in the mixture containing the aluminum source powder and the titanium source powder may be, for example, from 30/70 to 70/30, preferably from 40/60 to 60/40, though depending on the composition of the pulverized material to be obtained from the unfired regenerated starting material, on the composition of the aluminum titanate-based ceramics powder additionally usable as the new starting material, and on the content ratio of the pulverized material, the aluminum titanate-based ceramics powder and the powder mixture to be led to an aluminum titanate-based ceramics by firing in the regenerated clay.

The mixture containing the aluminum source powder and the titanium source powder may contain a magnesium source powder. The magnesium source powder includes a powder of magnesia (magnesium oxide) and a powder of a material to be led to magnesia by firing in air. Examples of the latter include, for example, magnesium salt, magnesium alkoxide, magnesium hydroxide, magnesium nitride, and magnesium metal.

The magnesium salt particularly includes magnesium chloride, magnesium perchlorate, magnesium phosphate, magnesium pyrophosphate, magnesium oxalate, magnesium nitrate, magnesium carbonate, magnesium acetate, magnesium sulfate, magnesium citrate, magnesium lactate, magnesium stearate, magnesium salicylate, magnesium myristate, magnesium gluconate, magnesium dimethacrylate, and magnesium benzoate.

The magnesium alkoxide particularly includes magnesium methoxide, and magnesium ethoxide.

As the magnesium source powder, a powder of a material serving both as a magnesium source and an aluminum source is also usable. The material includes, for example, magnesia spinel ($MgAl_2O_4$).

As the magnesium source powder, one type alone may be used or two or more types may be used here in combination with each other. The magnesium source powder may contain inevitable impurities that are derived from the starting materials thereof or are mixed in the production process.

The MgO (magnesia)-equivalent content of the magnesium source powder in the mixture containing the aluminum source powder and the titanium source powder is generally from 0.1 to 10 parts by mass, preferably 8 parts by mass or less relative to 100 parts by mass of the total of the $Al_2O_3$ (alumina) -equivalent amount of the aluminum source powder and the $TiO_2$ (titania)-equivalent amount of the titanium source powder, though depending on the composition of the pulverized material to be obtained from the unfired regenerated starting material, on the composition of the aluminum titanate-based ceramics powder additionally usable as the new starting material, and on the content ratio of the pulverized material, the aluminum titanate-based ceramics powder and the powder mixture to be led to an aluminum titanate-based ceramics by firing in the regenerated clay.

The mixture containing the aluminum source powder and the titanium source powder may further contain a silicon source powder. The silicon source powder is a powder of a material to be contained in the aluminum titanate-based ceramics body as a silicon ingredient. The silicon source powder includes, for example, a powder of silicon oxide (silica) such as silicon dioxide, and silicon monoxide.

The silicon source powder may also be a powder of a material capable of being led to silica by firing in air. The material includes, for example, silicic acid, silicon carbide, silicon nitride, silicon sulfide, silicon tetrachloride, silicon acetate, sodium silicate, sodium orthosilicate, feldspar, and glass frit. Feldspar, glass frit and the like are preferred, and glass frit and the like is preferred from the viewpoint of easiness for industrial availability and stable composition thereof. Glass frit is flaky or powdery glass to be obtained by grinding glass. As the silicon source powder, a use of a powder comprising a mixture of feldspar and glass frit is also preferable.

When glass frit is used, a use of one having a deformation point of 700°C or higher is preferable from the viewpoint of more improving the thermal decomposition resistance of the aluminum titanate-based ceramics body to be obtained. In the invention, the deformation point of glass frit is defined as the temperature (°C) which is measured with a thermo-mechanical analyzer (TMA), and at which expansion stops and then shrinkage starts next in a process of measuring the expansion of glass frit by heating it from a low temperature.

As the glass to constitute the above-mentioned glass frit, an ordinary silicate glass that comprises silicic acid

[SiO$_2$] as the main ingredient (contained in an amount of more than 50% by mass of all the constitutive ingredients) can be used. As the other constitutive ingredients than silicic acid therein, the glass to constitute the glass frit may contain alumina [Al$_2$O$_3$], sodium oxide [Na$_2$O], potassium oxide [K$_2$O], calcium oxide [CaO], magnesia [MgO] and others, like an ordinary silicate glass. The glass to constitute the glass frit may contain ZrO$_2$ for improving the hot water resistance of the glass itself.

As the silicon source powder, one type alone may be used or two or more types may be used in combination with each other. The silicon source powder may contain inevitable impurities that are derived from the starting materials thereof or are mixed in the production process.

The SiO$_2$ (silica)-equivalent content of the silicon source powder in the mixture containing the aluminum source powder and the titanium source powder is generally from 0.1 to 10 parts by mass, preferably 8 parts by mass or less relative to 100 parts by mass of the total of the Al$_2$O$_3$ (alumina)-equivalent amount of the aluminum source powder and the TiO$_2$ (titania)-equivalent amount of the titanium source powder, though depending on the composition of the pulverized material to be obtained from the unfired regenerated starting material, on the composition of the aluminum titanate-based ceramics powder additionally usable as the new starting material, and on the content ratio of the pulverized material, the aluminum titanate-based ceramics powder as the new starting material and the powder mixture to be led to an aluminum titanate-based ceramics by firing in the regenerated clay.

The mixture containing the aluminum source powder, the titanium source powder, and the optionally added magnesium source powder and/or silicon source powder can include a material that contains two or more metal elements of titanium, aluminum, silicon and magnesium, like the above-mentioned composite oxide of magnesia spinel (MgAl$_2$O$_4$) and the like. In this case, such a material may be considered to be equivalent to the mixture prepared by mixing the individual metal source compounds.

The median particle diameter of the aluminum titanate-based ceramics powder to be added as a new starting material to the regenerated clay, and the powder contained in the powder mixture as a new starting material to be led to an aluminum titanate-based ceramics by firing (aluminum source powder, titanium source powder, magnesium source powder, silicon source powder and others) is preferably 100 μm or less, more preferably from 1 to 50 μm from the viewpoint of further improving the mechanical strength and/or the low thermal expansion and the heat resistance of the aluminum titanate-based ceramics body to be obtained. The median particle diameter means a particle diameter (D50) corresponding to a cumulative percentage of 50 % on a volume basis measured through laser diffractometry.

The content ratio of the pulverized material in the regenerated clay, and the content ratio of the aluminum titanate-based ceramics powder and the powder mixture to be led to an aluminum titanate-based ceramics by firing are not specifically limited, and preferably controlled in consideration of the composition of the pulverized material to be obtained from the unfired regenerated starting material, the composition of the aluminum titanate-based ceramics powder additionally usable as the new starting material, and the composition of the powders in the powder mixture as the new starting material to be led to an aluminum titanate-based ceramics by firing. Particularly, the content ratio is preferably so controlled that the ratio by mass of the Al$_2$O$_3$ (alumina)-equivalent amount of the Al ingredient to the TiO$_2$ (titania)-equivalent amount of the Ti ingredient in the regenerated clay could be from 30/70 to 70/30, more preferably from 40/60 to 60/40. Also preferably, the MgO (magnesia)-equivalent content of the Mg ingredient in the regenerated clay is controlled to be from 0.1 to 10 parts by mass, more preferably 8 parts by mass or less relative to 100 parts by mass of the total amount of the Al$_2$O$_3$ (alumina)-equivalent amount of the Al ingredient and the TiO$_2$ (titania)-equivalent amount of the Ti ingredient. Also preferably, the SiO$_2$ (silica)-equivalent content of the Si ingredient in the regenerated clay is controlled to be from 0.1 to 10 parts by mass, more preferably 8 parts by mass or less relative to 100 parts by mass of the total amount of the Al$_2$O$_3$ (alumina)-equivalent amount of the Al ingredient and the TiO$_2$ (titania)-equivalent amount of the Ti ingredient. By controlling the content ratio of the Al ingredient, the Ti ingredient, the Mg ingredient and the Si ingredient to fall within the range, it is easy to obtain an aluminum titanate-based ceramics body more excellent in mechanical strength and thermal characteristics such as low thermal expansion and heat resistance.

(iii) Shaping Step:

In this step, the above-mentioned regenerated clay is shaped to give a shaped body. The shape of the shaped body is not specifically limited, and includes, for example, a honeycomb shape, a rod shape, a tubular shape, a tabular shape, and a crucible-like shape. Above all, when the obtained aluminum titanate-based ceramics body is applied to ceramics filters such as DPF, a honeycomb shape is preferred. The shaping machine usable for shaping the regenerated clay includes a uniaxial press, an extrusion shaping machine, a tabletting machine, and a granulating machine.

(iv) Firing Step:

In this step, the above-mentioned, regenerated clay shaped body is fired to give an aluminum titanate ceramics body. The firing temperature in firing the shaped body is generally 1300°C or higher, preferably 1400°C or higher. The firing temperature is generally lower than 1650°C, preferably 1550°C or lower. The heating rate up to the firing temperature is not specifically limited, and generally from 1°C/hr to 500°C/hr. When the regenerated clay contains a silicon ingredient derived from the silicon element, which is contained in the silicon source powder of the new starting material or in the pulverized material and/or the aluminum titanate-based ceramics powder of the new starting material, preferably, a step of holding the system in a temperature range of from 1100 to 1300°C for at least 3 hours is provided prior to the firing step. Accordingly, fusion and diffusion of the silicon ingredient in the aluminum titanate-based ceramics body can be promoted.

The firing step generally includes a step of drying the regenerated clay shaped body and a degreasing step (when the regenerated clay contains a combustible organic material such as binder). Typically, the drying and degreasing step is carried out during the heating stage up to the firing temperature (for example, in a temperature range not higher than 500°C).

In general, the firing is carried out in air, and if desired, the firing may be carried out in an inert gas such as nitrogen gas or argon gas, or in a reducing gas such as carbon monoxide gas or hydrogen gas. The firing may also be carried out in an atmosphere having a lowered water vapor partial pressure.

In general, the firing is carried out using an ordinary firing furnace such as a tubular electric furnace, a boxy electric furnace, a tunnel furnace, a far-IR furnace, a microwave heating furnace, a shaft furnace, a reverberating furnace, a rotary furnace, or a roller hearth furnace. The firing may be carried out by batch procee, or may be carried out by continuous process. The firing may be carried out in a static mode or may be carried out in a fluidized mode.

The time to be taken for the firing may vary depending on the amount of the starting material mixture, the type of the firing furnace, the firing temperature, the firing atmosphere and the like, and in general, the time is from 10 minutes to 24 hours.

As described above, the intended aluminum titanate-based ceramics body can be obtained. The aluminum titanate-based ceramics body keeps approximately the same shape as that of the shaped body immediately after shaping thereof. The obtained, aluminum titanate-based ceramics body can be processed into a desired form by cutting, machining and the like.

The X-ray diffraction spectrum of the aluminum titanate-based ceramics body obtained by the invention may include crystal patterns of alumina, titania, silica and the like, in addition to the crystal pattern of aluminum titanate or aluminum magnesium titanate. When the aluminum titanate-based ceramics powder comprises an aluminum magnesium titanate crystal, the ceramics powder can be represented by a compositional formula, $Al_{2(1-x)}Mg_xTi_{(1+x)}O_5$. In the compositional formula, the value x is preferably 0.01 or more, more preferably not less than 0.01 and not more than 0.7, even more preferably not less than 0.02 and not more than 0.5.

The unfired material that has been generated and recovered in the production process in the production process of the invention may be further used as the regenerated starting material in the production process of the invention.

EXAMPLES

The invention is described in more detail with reference to the following Examples, to which, however, the invention should not be limited. The three-point bending strength, the aluminum titanate conversion ratio (AT conversion ratio), the thermal decomposition rate, the coefficient of thermal expansion, the opening porosity and the pore diameter of the obtained aluminum titanate-based ceramics body; the median particle diameter of the starting material mixture to be used; and the water content and the ignition loss of the shaped body or the powder were determined according to the following methods.

(1) Three-Point Bending Strength:

A rectangular piece having a length of 50 mm, a width of 5 mm and a thickness of 5 mm is cut out of the aluminum titanate-based ceramics body, in the extrusion direction in extrusion shaping thereof. The outer surface of the thus-cut, ceramics body is polished to be smooth with no visible roughness, using a sandpaper (#1500). The three-point bending strength of the obtained sample is measured by the method according to JIS R 1601.

(2) AT Conversion Ratio:

The aluminum titanate conversion ratio (AT conversion ratio) was calculated from the integrated intensity ($I_T$) of the peak [assigned to the titania-rutile phase (110) face] appearing at the position of $2\theta = 27.4°$ in the powdery X-ray diffraction spectrum of the aluminum titanate-based ceramics body pounded in a mortar, and the integrated intensity ($I_{AT}$) of the peak [assigned to the aluminum magnesium titanate phase (230) face] appearing at the position of $2\theta = 33.7°$ therein by the following formula.

$$AT\ Conversion\ Ratio = I_{AT}/(I_T + I_{AT}) \times 100\ (\%).$$

(3) Thermal Decomposition Rate:

The aluminum titanate-based ceramics body was pulverized into powder, put in an alumina crucible and kept at 1100°C for 48 hours in a boxy electric furnace to give an aluminum titanate-based ceramics sample for thermal decomposition evaluation. In the powdery X-ray diffraction pattern (XRD) of the thus-prepared aluminum titanate-based ceramics sample for thermal decomposition evaluation, the integrated intensity ($I_{T2}$) of the peak [assigned to the titania-rutile phase (110) face] appearing at the position of $2\theta = 27.4°$, and the integrated intensity ($I_{AT2}$) of the peak [assigned to the aluminum titanate phase (230) face and the aluminum magnesium titanate phase (230) face] appearing at the position of $2\theta = 33.7°$ were measured, and the thermal decomposition rate was calculated by the following formula:

$$Thermal\ Decomposition\ Rate\ (\%) = 100 - 100 \times (I_{AT2})/(I_{AT2} + I_{T2}).$$

(4) Coefficient of Thermal Expansion:

A rectangular piece having a length of 50 mm, a width of 5 mm and a thickness of 5 mm was cut out of the aluminum titanate-based ceramics body, in the extrusion direction in extrusion shaping thereof, and then this was accurately cut so as to have parallel cut faces each having a length of 12 mm. Next, the test piece was heated up to 1000°C at a heating rate of 200°C/hr to burn away the fixation resin used in the cutting operation, and then cooled to room temperature (25°C). Using a thermomechanical analyzer (SII Technology's TMA6300), the heat-treated test piece was heated from room temperature (25°C) up to 1000°C at 600°C/hr, and from the expansion rate of the test piece, the coefficient [$K^{-1}$] of thermal expansion was calculated based on the following formula:

$$Coefficient\ [K^{-1}]\ of\ Thermal\ Expansion$$

$$= expansion\ rate\ of\ test\ piece/975\ [K].$$

In this, the expansion rate of the test piece means: (length of the test piece in the extrusion direction when heated up to 1000°C - length of the test piece in the extrusion direction before heating (25°C))/(length of the test piece in the extrusion direction before heating (25°C)).

(5) Opening Porosity

By the Archimedes method by dipping in water according to JIS R1634, the weight in water M2 (g), the water-saturated weight M3 (g) and the dry weight M1 (g) of the aluminum titanate-based ceramics body were measured; and the opening porosity was calculated according to the following formula:

$$Opening\ Porosity\ (\%) = 100 \times (M3 - M1)/(M3 - M2).$$

(6) Pore Diameter:

The aluminum titanate-based ceramics body in the amount of 0.4 g was pulverized, and the obtained small pieces of about 2 mm square were dried in air at 120°C for 4 hours, and then analyzed to measure the pore radius in a detection range of from 0.001 to 100.0 $\mu$m by a mercury intrusion method. The value obtained by doubling the pore radius showing the maximum frequency on a pore volume basis was taken as the pore diameter (mode diameter). As the measurement apparatus, Micrometrics' "Autopore III9420" was used.

(7) Median Particle Diameter of Starting Material Powder:

The median particle diameter [particle diameter (D50) corresponding to a cumulative percentage of 50 % on a volume basis] of the starting material powder was determined using a laser diffractometric particle sizer (Nikkiso's Microtrac HRA (X-100)".

(8) Water Content:

About 5 g of the sample (pulverized heat-treated product) was taken in a glass container, and the initial mass $(W_0)$ of the sample was weighed. Next, the sample was heat-treated at 110°C for 2 hours as in the glass container and then cooled to room temperature. The mass $(W_1)$ of the sample after cooled was weighed, and the water content was calculated according to the following formula:

$$\texttt{Water Content (\% by mass) = 100} \times \texttt{(W}_0 \texttt{ - W}_1\texttt{)/W}_0.$$

(9) Ignition Loss:

The sample (pulverized heat-treated product) was previously heat-treated at 110°C for 2 hours, and about 5 g of the sample obtained after the heat treatment was taken in a platinum container, and the initial mass $(W_2)$ of the sample was weighed. Next, the sample was heat-treated at 1100°C for 2 hours as in the platinum container and then cooled to room temperature. The mass $(W_3)$ of the sample after cooled was weighed, and the ignition loss was calculated by the following formula:

$$\texttt{Ignition Loss (\% by mass) = 100} \times \texttt{(W}_2 \texttt{ - W}_3\texttt{)/W}_2.$$

<Example 1>

As the starting material powders, the following were used. The prepared composition of the starting material powders mentioned below is, in terms of the alumina $[Al_2O_3]$-equivalent, titania $[TiO_2]$-equivalent, magnesia $[MgO]$-equivalent and silica $[SiO_2]$-equivalent ratio by mass thereof, $[Al_2O_3]/[TiO_2]/[MgO]/[SiO_2]$ = 47%/47%/2%/4%.

| | |
|---|---|
| (1) Aluminum source powder | |
| Aluminum oxide powder ($\alpha$-alumina powder) having D50 of 29 $\mu$m | 47 parts by mass |
| (2) Titanium source powder: | |
| Titanium oxide powder (rutile-form crystal) having D50 of 0.5 $\mu$m | 47 parts by mass |
| (3) Magnesium source powder: | |
| Magnesium oxide powder having D50 of 2.5 $\mu$m | 2 parts by mass |
| (4) Silicon source powder: | |
| Glass frit (Takara Standard's "CK0160M1", having $SiO_2$ content of 70%) having D50 of 5.4 $\mu$m | 4 parts by mass |

To the mixture of the above aluminum source powder, titanium source powder, magnesium source powder and silicon source powder, added were, relative to 100 parts by mass of the mixture, potato starch as a pore-forming agent in an amount of 14 parts by mass, methyl cellulose as a binder in an amount of 9 parts by mass, polyoxyalkylene alkyl ether as a surfactant in an amount of 5 parts by mass, and glycerin as a lubricant in an amount of 0.5 parts by mass, and further water as a dispersant was added thereto in an amount of 32 parts by mass, and then kneaded with a kneader to prepare a clay for shaping. Next, the shaping clay was shaped by extrusion to produce a honeycomb-form shaped body. In an air atmosphere, the obtained shaped body was heat-treated at 120°C for 5 hours to give a heat-treated product of the shaped body. The water content of the heat-treated product was 5% by mass or less.

The heat-treated product was roughly ground to have a diameter of 2 cm or less or so, and this was pulverized using a roll crusher (distance between rolls, 2 mm). Using a sieve having a sieve mesh size of 1 mm, this was sieved, and the powder having passed through the sieve was collected to obtain a pulverized material.

Water was added to the pulverized material in an amount of 32 parts by mass relative to 100 parts by mass of the pulverized material, and then kneaded with a kneader to prepare a regenerated clay. Next, the regenerated clay was shaped by extrusion to give a honeycomb-form shaped body. The obtained shaped body was fired at 1450°C for 5 hours to obtain a honeycomb-shaped aluminum titanate-based ceramics body.

The three-point bending strength of the obtained aluminum titanate-based ceramics body was 1.5 MPa or more, the AT conversion ratio thereof was 100%, the thermal decomposition ratio thereof was 5% or less, the coefficient of thermal expansion thereof was $1 \times 10^{-6}$ K$^{-1}$ or less, the opening porosity thereof was from 40 to 55%, and the pore diameter thereof was from 10 to 20 $\mu$m. When the obtained aluminum titanate-based ceramics was represented by a compositional formula $Al_{2(1-x)}Mg_xTi_{(1+x)}O_5$, x was 0.12.

<Example 2>

A honeycomb-form shaped body was produced by shaping a clay for shaping by extrusion in the same manner as in Example 1. The obtained shaped body was heat-treated at 500°C in an air atmosphere for 10 hours to obtain a heat-treated product of the shaped body. The ignition loss of the heat-treated product was 5% by mass or less. The heat-treated product was roughly ground to have a diameter of 2 cm or less or so, and this was ground using a roll crusher (distance between rolls, 2 mm). Using a sieve having a sieve mesh size of 1 mm, this was sieved, and the powder having passed through the sieve was collected to obtain a pulverized material.

To the pulverized material, added were, relative to 100 parts by mass of the ground material, potato starch as a pore-forming agent in an amount of 14 parts by mass, methylcellulose as a binder in an amount of 9 parts by mass, polyoxyalkylene alkyl ether as a surfactant in an amount of 5 parts by mass, and glycerin as a lubricant in an amount of 0.5 parts by mass. Further, water as a dispersant was added thereto in an amount of 32 parts by mass, and kneaded with a kneader to prepare a regenerated clay. Next, the regenerated clay was shaped by extrusion to produce a honeycomb-form shaped body. The obtained shaped body was fired at 1450°C for 5 hours to obtain a honeycomb-shaped aluminum titanate-based ceramics body.

The three-point bending strength of the obtained aluminum titanate-based ceramics body was 1.5 MPa or more, the AT conversion ratio thereof was 100%, the thermal decomposition ratio thereof was 5% or less, the coefficient of thermal expansion thereof was $1 \times 10^{-6}$ K$^{-1}$ or less, the opening porosity thereof was from 40 to 55%, the pore diameter thereof was from 10 to 20 $\mu$m. When the obtained aluminum titanate-based ceramics was represented by a compositional formula $Al_{2(1-x)}Mg_xTi_{(1+x)}O_5$, x was 0.12.

<Comparative Example 1>

A heat-treated product of a shaped body was produced by heat-treating a honeycomb-form shaped body in an air atmosphere at 120°C for 5 hours in the same manner as in Example 1. The heat-treated product was roughly ground to have a diameter of 2 cm or less or so, and this was pulverized using a roll crusher (distance between rolls, 2 mm). The obtained pulverized material contained many particles having a diameter of more than 1 mm.

Water was added to the pulverized material in an amount of 32 parts by mass relative to 100 parts by mass of the pulverized material, and kneaded with a kneader to prepare a regenerated clay. Next, the regenerated clay was shaped by extrusion to give a honeycomb-form shaped body. The obtained shaped body was fired at 1450°C for 5 hours to obtain a honeycomb-shaped aluminum titanate-based ceramics body.

The three-point bending strength of the obtained aluminum titanate-based ceramics body was less than 1.5 MPa, the AT conversion ratio thereof was 100%, the thermal decomposition ratio thereof was 5% or less, the coefficient of thermal expansion thereof was $1 \times 10^{-6}$ K$^{-1}$ or less, the opening porosity thereof was from 40 to 55%, the pore diameter thereof was from 10 to 20 $\mu$m. When the obtained aluminum titanate-based ceramics was represented by a compositional formula $Al_{2(1-x)}Mg_xTi_{(1+x)}O_5$, x was 0.12.

The mode and Examples for carrying out the invention disclosed at this time are exemplification in all aspects, and those should be considered unlimitedly. The scope of the invention is indicated not by the above-mentioned description but by the claims, and is intended to comprise all variations in the meaning and in the range of claims-equivalent.

**Claims**

1. A process for producing an aluminum titanate-based ceramics body using an unfired regenerated starting material recovered in a production process for an aluminum titanate-based ceramics body, comprising the following steps:

    (i) a step of preparing a pulverized material having a diameter of 1 mm or less from the unfired regenerated starting material;
    (ii) a step of preparing a regenerated clay containing the pulverized material and water;

(iii) a step of shaping the regenerated clay to form a shaped body; and

(iv) a step of firing the shaped body.

2. The process according to claim 1, wherein the unfired regenerated starting material is an unfired shaped body or broken pieces thereof, or an intermediate for which a heating up to a firing temperature has been stopped along the way.

3. The process according to claim 1 or 2, wherein the step (i) of preparing the pulverized material having a diameter of 1 mm or less includes a step of pulverizing and/or classifying the unfired regenerated starting material.

4. The process according to claim 3, wherein the classification is carried out by sieving.

5. The process according to any of claims 1 to 4, wherein the diameter of the pulverized material is 200 $\mu$m or less.

6. The process according to any of claims 1 to 5, wherein the unfired regenerated starting material or the pulverized material has been heat-treated at a temperature lower than 1300°C.

7. The process according to claim 6, wherein the unfired regenerated starting material or the pulverized material has been heat-treated in an atmosphere containing oxygen in an amount of 1% by volume or more, or in an oxygen-containing gas current that contains oxygen in an amount of 1% by volume or more.

8. The process according to claim 6 or 7, wherein the unfired regenerated starting material or the pulverized material has been so heat-treated that the water content thereof could be 5% by mass or less.

9. The process according to claim 8, wherein the heat treatment temperature is lower than 150°C.

10. The process according to claim 8 or 9, wherein the step (ii) of preparing the regenerated clay includes a step of kneading the pulverized material at least with water added thereto.

11. The process according to claim 6 or 7, wherein the unfired regenerated starting material or the pulverized material has been so heat-treated that the ignition loss thereof could be 5% by mass or less.

12. The process according to claim 11, wherein the heat treatment temperature is 300°C or higher and lower than 1000°C.

13. The process according to claim 11 or claim 12, wherein the step (ii) of preparing the regenerated clay includes a step of kneading the pulverized material at least with water and with one or more kinds of ingredient selected from a group of a binder, a lubricant and a pore-forming agent added thereto.

14. The process according to any of claims 1 to 13, wherein the unfired regenerated starting material comprises an aluminum titanate-based ceramics and/or a mixture to be led to an aluminum titanate-based ceramics by firing.

15. The process according to claim 14, wherein the aluminum titanate-based ceramics contains an aluminum element and a titanium element.

16. The process according to claim 15, wherein the aluminum titanate-based ceramics further contains a magnesium element.

17. The process according to claim 15 or 16, wherein the aluminum titanate-based ceramics further contains a silicon element.

18. The process according to any of claims 14 to 17, wherein the mixture contains an aluminum source powder and a titanium source powder.

19. The process according to claim 18, wherein the mixture contains a magnesium source powder.

20. The process according to claim 18 or 19, wherein the mixture contains a silicon source powder.

21. The process according to claim 20, wherein the silicon source powder is a powder comprising feldspar or glass frit, or a mixture thereof.

22. The process according to any of claims 1 to 21, wherein the regenerated clay further contains one or more kinds of ingredients selected from a group of a binder, a lubricant and a pore-forming agent.

23. The process according to any of claims 1 to 22, wherein the regenerated clay further contains a new starting material comprising an aluminum titanate-based ceramics powder and/or a powder mixture to be led to an aluminum titanate-based ceramics by firing.

24. The process according to claim 23, wherein the aluminum titanate-based ceramics powder to constitute the new starting material contains an aluminum element and a titanium element.

25. The process according to claim 24, wherein the aluminum titanate-based ceramics powder to constitute the new starting material further contains a magnesium element.

26. The process according to claim 24 or 25, wherein the aluminum titanate-based ceramics powder to constitute the new starting material further contains a silicon element.

27. The process according to any of claims 23 to 26, wherein the powder mixture to constitute the new starting material contains an aluminum source powder and a titanium source powder.

28. The process according to claim 27, wherein the powder mixture to constitute the new starting material contains a magnesium source powder.

29. The process according to claim 27 or 28, wherein the powder mixture to constitute the new starting material contains a silicon source powder.

30. The process according to claim 29, wherein the silicon source powder is a powder comprising feldspar or glass frit, or a mixture thereof.

31. The process according to any of claims 23 to 30, wherein the median particle diameter of the aluminum titanate-based ceramics powder and/or the powders contained in the powder mixture, which constitute the new starting material, is 100 $\mu$m or less.

32. The process according to any of claims 1 to 31, wherein the firing temperature in the step (iv) of firing the shaped body is 1300°C or higher and lower than 1650°C.

33. An aluminum titanate-based ceramics honeycomb shaped body for ceramics filters, produced in the process according to the process of any of claims 1 to 32.

34. A diesel particulate filter comprising the honeycomb shaped body of claim 33.

<div align="center">**INTERNATIONAL SEARCH REPORT**</div>

| | International application No. |
|---|---|
| | PCT/JP2010/055606 |

A. CLASSIFICATION OF SUBJECT MATTER
*C04B35/46*(2006.01)i, *B01D39/20*(2006.01)i, *B09B3/00*(2006.01)i, *C04B35/00*
(2006.01)i

According to International Patent Classification (IPC) or to both national classification and IPC

B. FIELDS SEARCHED

Minimum documentation searched (classification system followed by classification symbols)
C04B35/46, B01D39/20, B09B3/00, C04B35/00

Documentation searched other than minimum documentation to the extent that such documents are included in the fields searched
Jitsuyo Shinan Koho        1922-1996   Jitsuyo Shinan Toroku Koho   1996-2010
Kokai Jitsuyo Shinan Koho  1971-2010   Toroku Jitsuyo Shinan Koho   1994-2010

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2008/066765 A1 (CORNING INC.), 05 June 2008 (05.06.2008), claims; paragraphs [0002], [0007], [0008], [0032], [0038] | 1-3,5-15,17, 18,20,22-24, 26,27,29, 31-34 |
| Y | & US 2008/0125305 A1    & EP 2086907 A & CN 101553446 A | 4,16,19,21, 25,28,30 |
| X | WO 2005/105704 A1 (Ohcera Co., Ltd.), 10 November 2005 (10.11.2005), claims; paragraphs [0021], [0023], [0047] | 33,34 |
| Y | & US 2007/0224110 A1    & EP 1741684 A1 & CA 2563600 A          & KR 10-2007-0012365 A & CN 1946653 A | 16,19,21,25, 28,30 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 14 June, 2010 (14.06.10) | 29 June, 2010 (29.06.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2010/055606 |

**C (Continuation).** DOCUMENTS CONSIDERED TO BE RELEVANT

| Category* | Citation of document, with indication, where appropriate, of the relevant passages | Relevant to claim No. |
| --- | --- | --- |
| Y | WO 2008/078747 A1 (Hitachi Metals, Ltd.), 03 July 2008 (03.07.2008), claims; paragraph [0023] & US 2010/0044911 A & EP 2098493 A1 & CN 101553445 A | 4 |
| A | JP 2005-126317 A (NGK Insulators, Ltd.), 19 May 2005 (19.05.2005), claims; paragraphs [0002] to [0006] & US 2005/0069675 A1 & US 2007/0298958 A1 & EP 1679294 A1 & WO 2005/030675 A1 & DE 102004043250 A & BE 1016207 A & KR 10-2006-0096040 A & CN 1609417 A | 1-34 |
| A | JP 11-228219 A (Mitsui Mining & Smelting Co., Ltd.), 24 August 1999 (24.08.1999), claims (Family: none) | 1-34 |
| A | JP 10-218662 A (Toray Industries, Inc.), 18 August 1998 (18.08.1998), claims; paragraphs [0008], [0026] (Family: none) | 1-34 |
| A | JP 2005-170763 A (TDK Corp.), 30 June 2005 (30.06.2005), claims; paragraph [0009] (Family: none) | 1-34 |

Form PCT/ISA/210 (continuation of second sheet) (July 2009)

## INTERNATIONAL SEARCH REPORT

International application No.

PCT/JP2010/055606

| Box No. II | Observations where certain claims were found unsearchable (Continuation of item 2 of first sheet) |
|---|---|

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

| Box No. III | Observations where unity of invention is lacking (Continuation of item 3 of first sheet) |
|---|---|

This International Searching Authority found multiple inventions in this international application, as follows:

```
    The invention in claim 1 does not have a novelty and a special technical
feature, since the invention is described in the following document 1.
Consequently, the invention in claim 1 does not satisfy the requirement of
unity.
    The invention in claims as indicated below is relevant to main invention.

    Claims 1 - 10, 14 - 32
    Document 1: WO 2008/066765 A1 (CORNING INC.), 5 June 2008 (05.06.2008)
```

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**EP 2 415 730 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 05105704 A